# EUROPEAN PATENT APPLICATION

(11) **EP 1 733 773 A1**
(43) Date of publication of application: **20.12.2006**
(21) Application number: 05013121.8
(22) Date of filing: 17.06.2005
(51) Int. Cl.: B01D 3/00, B01D 53/14, B01D 1/00, B01J 19/00

(54) **Process for carrying out mass transfer between a liquid phase and a gaseous phase**

(71) Applicant: METHANOL CASALE S.A., 6900 Lugano-Besso (CH)
(72) Inventor: Filippi, Ermanno, 8976 Castagnola (CH); Tarozzo, Mirco, 8853 Ligornetto (CH); Rizzi, Enrico, 22070 Casnate con Bernate (CO) (IT)
(74) Representative: Zardi, Marco

(57) **Abstract**

A process for carrying out mass transfer between a liquid phase (Fl) and a gaseous phase (Fg) in a filled-type column comprising an outer shell (2) in which at least one basket (3a,3b) is housed for containing the filling crossed by said phases is distinguished in that it comprises the step of subjecting said liquid phase (Fl) and said gaseous phase (Fg) to an indirect heat exchange (21) in said at least one basket (3a,3b) through at least one heat exchanger (21) embedded in said filling. In such a way increased mass transfer efficiency between the aforementioned phases is achieved with the consequent possibility of reduction of the size of the column intended to carry out such a process.

## Description

### Field of application

The present invention concerns a process for carrying out mass transfer between a liquid phase and a gaseous phase in a filled-type column crossed by said phases.

In the rest of the description and in the subsequent claims, with the term "filled-type column" it is generically intended an apparatus inside which a plurality of elements is arranged having the most varied shapes and sizes (filling) on the surface of which a liquid phase and a gaseous phase are placed in contact to carry out mass transfer. Apparatuses of this type are widely used in chemical plants for - for example - decomposition, absorption, distillation and washing of chemical substances.

The present invention also concerns a filled-type column for carrying out the aforementioned process.

As known in the field, there is an increasing requirement to make processes that are easy to operate, which allow mass transfer between a liquid phase and a gaseous phase to be carried out in a simple and effective manner, with low operating and investment costs, and with low energy consumption.

### Prior art

In this field various processes for carrying out mass transfer are known where a liquid phase and a gaseous phase are flowed in countercurrent through a filled-type column.

Regarding this, processes are known in which the motion of the aforementioned phases in the filled-type column is substantially axial with the gaseous phase that flows from the bottom towards the top and the liquid phase that flows from the top to the bottom. Processes are also known in which the motion of the aforementioned phases is axial-radial, in other words cross-flow, with the liquid phase that crosses the filling with axial motion from the top towards the bottom and the gaseous phase that crosses said filling with radial motion.

By the term "radial motion" it is intended a motion of the gaseous phase inside the filled-type column of the substantially radial type as well as mainly radial, axial-radial or transversal.

In particular, with the gaseous phase that crosses the filling with radial motion instead of with axial motion it is known that it is possible to obtain a substantial increase in mass transfer between the phases with the possibility of reducing the size of the corresponding column.

Although advantageous from various points of view, the aforementioned processes have a recognized limitation in efficiency and in mass transfer yield between the gaseous phase and the liquid phase should such a mass transfer also be associated with a heat exchange between said phases. For example in case of absorption or separation processes of chemical compounds that due to the nature of such compounds occur exothermally or endothermally.

In these conditions, indeed, the heat exchange becomes more and more a limiting factor of the efficiency of the mass transfer between the liquid phase and the gaseous phase with the result that it is necessary to increase the size (height) of the filled-type column to obtain the desired mass transfer.

In the attempt to avoid this drawback, it has been proposed in the prior art to equip the filled-type columns with external heat exchangers in which the liquid phase resulting from a heat exchange and mass transfer with the gaseous phase and extracted by said columns is subjected to an indirect heat exchange with a cooling or heating liquid so as to be taken into optimal temperature conditions for a subsequent heat exchange with said gaseous phase inside said columns.

Nevertheless, this solution although on the one hand allows a certain increase in mass transfer yield to be obtained between the aforementioned phases, on the other hand it implies a worsening of the design, manufacturing and operating costs and of the energy consumption since besides the need for heat exchangers additional apparatuses such as pumps, pipes, etc. are also required.

Patent application EP-A-1 060 013 to the Applicant describes a process for mass transfer between a liquid phase and a gaseous phase with axial and radial motion, respectively, in a filled-type column, in which the gaseous phase coming out from a filling contained in a basket and directed towards a filling contained in a subsequent basket is subjected to an indirect heat exchange in a heat exchanger arranged in a central space of the column.

It is considered that such an exchanger allows the washing, absorption, distillation and decomposition processes for which said column is intended to be improved.

However, such a process only allows temperature control on the gaseous phase in a zone of the column between successive baskets in which no mass transfer between said phases occurs.

The technical problem underlying the present invention is that of providing a process for carrying out mass transfer between a liquid phase and a gaseous phase that allows a high mass transfer yield to be obtained between said phases, also in the presence of an associated heat exchange between them, in a simple and effective way with low operating and investment costs, and with low energy consumption.

### Summary of the invention

Such a problem is solved, according to the present invention, by a process for carrying out mass transfer between a liquid phase and a gaseous phase in a filled-type column comprising an outer shell in which at least one basket is housed for containing the filling crossed by said phases, characterized in that it comprises the step of subjecting said liquid phase and said gaseous phase to an indirect heat exchange in said at least one basket through at least one heat exchanger embedded in said filling.

In this way, i.e. subjecting the gaseous phase and the liquid phase to indirect heat exchange in said at least one basket, it has been surprisingly found that a substantial increase in the mass transfer efficiency between said phases is obtained since it is possible to make such a mass transfer take place in substantially isothermal conditions or otherwise in a predetermined desired temperature range.

More specifically, a possible excess or defect in heat due to the exothermal or endothermal nature of the mass transfer between the aforementioned phases can be compensated by a corresponding absorption or release of heat by an operating fluid flowing in said at least one heat exchanger with this avoiding that such an excess or defect in heat becomes a limiting factor of the mass transfer between said phases.

In virtue of the increased mass transfer efficiency achieved with the process according to the invention it is also possible with the same capacity to decrease the size of the column to obtain a desired mass transfer between the aforementioned phases.

Therefore, thanks to the process according to the invention it is now possible to obtain a high mass transfer yield between the phases with a filled-type column that operates in a very efficient way, with low operating and investment costs, and with low energy consumption.

In accordance with an embodiment of the invention, the process for carrying out mass transfer between a liquid phase and a gaseous phase in a filled-type column comprising an outer shell in which at least one basket is housed for containing the filling, is characterized in that it comprises the following steps:
- feeding said liquid phase and said gaseous phase into said filled-type column,
- flowing said liquid phase and said gaseous phase through said at least one basket,
- extracting said liquid phase and said gaseous phase from said filled-type column,
- subjecting said liquid phase and said gaseous phase to an indirect heat exchange in said at least one basket through at least one heat exchanger embedded in said filling.

Preferably, the aforementioned indirect heat exchange is carried out so as to keep said liquid phase and said gaseous phase in a predetermined temperature range.

Preferably, said liquid phase and said gaseous phase are flowed in countercurrent through said at least one basket.

Preferably, said liquid phase is flowed through said at least one basket with substantially axial motion whereas said gaseous phase is flowed through said at least one basket with substantially axial or radial motion.

Preferably, said liquid phase and said gaseous phase are flowed with axial and radial motion, respectively through a plurality of baskets for containing the filling superimposed one above the other and they are subjected in each of said baskets to indirect heat exchange through at least one heat exchanger embedded in the filling of each of said baskets.

The aforementioned technical problem is also solved by a filled-type column for carrying out mass transfer between a liquid phase and a gaseous phase of the type comprising:
- an outer shell;
- at least one basket for containing the filling extending in said shell, said at least one basket being crossed by said phases;
- means for feeding to said column said liquid phase and said gaseous phase, respectively, in fluid communication with said at least one basket;
- means for extracting from said column said liquid phase and said gaseous phase, respectively, in fluid communication with said at least one basket;
characterized in that it comprises at least one heat exchange unit inside said at least one basket to carry out an indirect heat exchange with said liquid phase and said gaseous phase.

Further characteristics and advantages of the present invention shall become clearer from the following description of an embodiment of the process according to the invention, given for indicating and not limiting purposes with reference to the attached drawings.

### Brief description of the drawings

In the figures:
- figure 1 shows a partial section perspective view of a filled-type column for carrying out the process according to the invention;

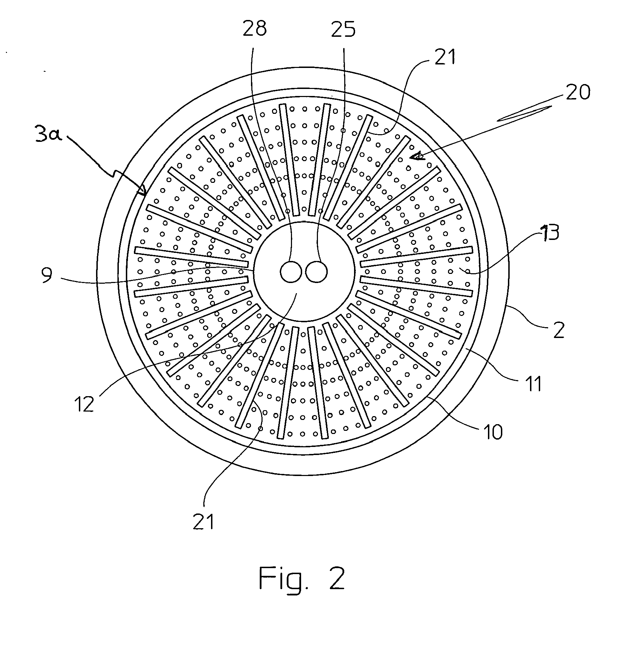

- figure 2 shows a section view of the apparatus of figure 1 taken along the lines I-I.

### Detailed description

With reference to the aforementioned figures, a filled-type column for carrying out mass transfer between a liquid phase and a gaseous phase according to the invention is wholly indicated with 1.

The column 1 comprises a substantially cylindrical outer shell 2, at least one basket 3a-3b for containing a filling, *per se* conventional and not represented, means 5 and 6 for feeding a liquid phase and a gaseous phase to the column 1, respectively, and means 7 and 8 for extracting the liquid phase and the gaseous phase from the column 1, respectively.

The means 5 for feeding the liquid phase to the column 1 generally comprise nozzles 5a, ducts 5b and nozzle distributors 5c, of the type known to the man skilled in the art and which therefore are not described in particular detail in the rest of the description.

The means 7 for extracting the liquid phase from the column 1 generally comprise collection chambers 7a and nozzles 7b, of the type known to the man skilled in the art and which therefore are not described in particular detail in the rest of the description.

In the same way, the means 6 and 8 for feeding and extracting the gaseous phase to/from the column 1, respectively, generally comprise inlet and outlet nozzles 6a and 8a, respectively, of the type known to the man skilled in the art, and therefore they are not described in particular detail in the rest of the description.

In the example of the figures, the means 5 and 8 are arranged at an upper cover 2b of the shell 2 whereas the means 6 and 7 are arranged at a lower cover 2c of such a shell 2.

More specifically, the liquid phase is fed through the means 5 at an upper end of the column 1 and is extracted therefrom, through the means 7, at a lower end thereof. The liquid phase thus crosses the column with substantially axial motion.

The gaseous phase, on the other hand, is fed through the means 6 at a lower end of the column 1 and is extracted therefrom, through the means 8, at an upper end thereof.

Each basket 3a-3b, supported in the column 1 in a *per se* conventional way, has a substantially cylindrical configuration with annular cross section, extends coaxially in the shell 2 and is equipped with opposite gas-permeable cylindrical walls 9 and 10, inner and outer respectively.

An annular space 11 is defined between an inner wall 2a of the shell 2 and the outer wall 10 of said at least one basket, whereas a cylindrical space 12 is defined inside the inner wall 9 of said at least one basket.

In the example of the figures, the column 1 comprises two annular baskets 3a and 3b, lower and upper respectively, for containing the filling (not represented), superimposed one above the other and extending coaxially in the shell 2. The baskets 3a-3b are in fluid communication with the means 5, 6 and 7, 8 for feeding and extracting the liquid phase and the gaseous phase, respectively.

Such baskets 3a-3b are crossed with substantially axial motion by the liquid phase that flows from the top towards the bottom as indicated by the arrows F1 and with substantially axial-radial motion by the gaseous phase that flows from the bottom towards the top of the column 1 as indicated by the arrows Fg. In other words, according to the example, the liquid phase and the gaseous phase are flowed in countercurrent through said baskets. In accordance with a further embodiment of the present invention, not represented, the aforementioned phases are flowed in equicurrent through said baskets.

The number of baskets inside the shell 2 can, however, vary according to the size of the column 1 and the degree of mass transfer that one wishes to achieve. A number of baskets of between one and twenty should however be sufficient to be able to satisfy the most varied requirements.

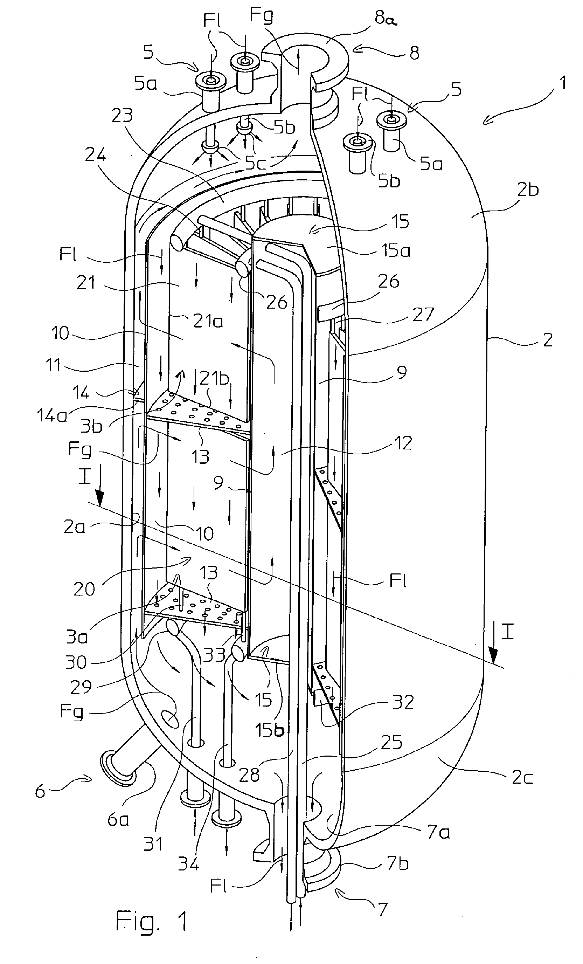

The baskets represented in figure 1 are contiguous to each other and comprise a perforated bottom plate 13 that is permeable both to the liquid phase and to the gaseous phase. Advantageously, the perforated bottom plates 13 are suitably sized to radially deviate at least a part of the gaseous phase and/or to collect and redistribute the liquid phase between the baskets.

The collection and redistribution of the liquid phase between the baskets 3b and 3a allows the mass transfer between the phases to be carried out by exploiting the surface of all of the filling and avoiding the formation of preferential paths of the liquid phase during the crossing thereof.

The column 1 also comprises means 14, 15 for closing the annular space 11 and the cylindrical space 12, respectively, to flow the gaseous phase through said at least one basket 3a-3b from the space 11 to the space 12, or vice-versa.

The closing means 14 comprise at least one annular baffle 14a that is not permeable to the gases arranged in the annular space 11 at a height substantially corresponding to that of the overlapping between successive baskets. The closing means 15, on the other hand, comprise two circular baffles 15a-15b that are not permeable to the gases arranged to close the lower end and the upper end of the cylindrical space 12, respectively.

In particular, in the example of figure 1, the column 1 comprises an annular baffle 14a arranged at the height of overlapping between the lower basket 3a and the upper basket 3b and two circular baffles 15b and 15a arranged at the lower end and at the upper end of the space 12, respectively.

In such a way it is possible to flow the gaseous phase from one basket 3a to the next basket 3b with mainly radial motion avoiding possible by-pass phenomena of one or both of the baskets by the gaseous phase that would have a negative effect for the global yield of the mass transfer between the phases.

In accordance with the present invention, the column 1 comprises at least one heat exchange unit globally indicated with 20. Each heat exchange unit is suitably arranged inside a respective basket 3a-3b, so as to be embedded in the filling contained in it. For this purpose, said at least one heat exchange unit 20 is supported in the column 1 in a *per se* conventional way that is not represented.

In particular, in the embodiment represented in figure 1, the column 1 comprises two heat exchange units 20; a first unit 20 inside the basket 3a and a second unit 20 inside the basket 3b.

In the example of the figures, each heat exchange unit 20 comprises a plurality of heat exchangers 21, preferably arranged substantially radially.

Preferably, the heat exchangers 21 have a substantially box-shaped structure with rectangular plates having long sides 21a parallel to the longitudinal axis of the shell 2 of the column 1 and short sides 21b that extend radially.

More specifically, each heat exchanger 21 is made in a conventional way from two juxtaposed metal plates that are suitably welded together at predetermined distances so as to form a chamber (of the known type and not represented) on the inside for the passage of a heat exchange operating fluid.

For the distribution of the heat exchange operating fluid inside the heat exchangers 21 of the unit 20 arranged inside the basket 3b of the example of figure 1, an annular distribution duct 23 is provided in fluid communication with the inner chambers of said exchangers 21 through respective manifolds 24. The annular distribution duct 23 is also in fluid communication with the outside of the column 1 to receive said heat exchange operating fluid through a duct 25 passing into the cylindrical space 12 and into the outlet means 7 of the liquid phase.

In the same way, for the collection of the heat exchange operating fluid from the heat exchangers 21 of such a unit 20 arranged inside the basket 3b, an annular collection duct 26 is provided in fluid communication with the inner chambers of said exchangers 21 through respective manifolds 27. The annular collection duct 26 is also in fluid communication with the outside of the column 1 to release said heat exchange operating fluid through a duct 28 also passing into the cylindrical space 12 and into the outlet means 7 of the liquid phase.

Moreover, for the distribution of the heat exchange operating fluid inside the heat exchangers 21 of the unit 20 arranged inside the basket 3a of the example of figure 1, an annular distribution duct 29 is provided in fluid communication with the inner chambers of said exchangers 21 through respective manifolds 30. The annular distribution duct 29 is also in fluid communication with the outside of the column 1 to receive said heat exchange operating fluid through a duct 31 passing into the shell 2 at its lower cover 2b.

For the collection of the heat exchange operating fluid from the heat exchangers 21 of such a unit 20 arranged inside the basket 3a an annular collection duct 32 is analogously provided in fluid communication with the inner chambers of said exchangers 21 through respective manifolds 33. The annular collection duct 32 is also in fluid communication with the outside of the column 1 to release said heat exchange operating fluid through a duct 34 also passing into the shell 2 at its lower cover 2b.

In the embodiment of figure 1, the annular distribution duct 23 and the annular collection duct 26 are arranged close to the upper end of the basket 3b in a position over the heat exchangers 21, whereas the annular distribution duct 31 and the annular collection duct 34 are arranged close to the lower end of the basket 3a in a position below the heat exchangers 21.

In such an embodiment, the operating fluid fed to the heat exchangers 21 of the heat exchange unit 20 inside the basket 3b can be the same or different with respect to the operating fluid fed to the heat exchangers 21 of the heat exchange unit 20 inside the basket 3a.

Of course, a man skilled in the art can bring numerous modifications and variants to the filled-type column according to the invention described above in order to satisfy contingent and specific requirements, all of which are in any case covered by the scope of protection of the invention, as defined by the following claims.

## Claims

1. Process for carrying out mass transfer between a liquid phase and a gaseous phase in a filled-type column comprising an outer shell in which at least one basket is housed for containing the filling crossed in countercurrent by said phases, **characterized in that** it comprises the step of subjecting said liquid phase and said gaseous phase to an indirect heat exchange in said at least one basket through at least one heat exchanger embedded in said filling.

2. Process according to claim 1, **characterized in that** it comprises the following steps:
- feeding said liquid phase and said gaseous phase into said filled-type column,
- flowing said liquid phase and said gaseous phase through said at least one basket,
- extracting said liquid phase and said gaseous phase from said filled-type column,
- subjecting said liquid phase and said gaseous phase to an indirect heat exchange in said at least one basket through at least one heat exchanger embedded in said filling.

3. Process according to claim 1, **characterized in that** said indirect heat exchange is carried out so as to keep said liquid phase and said gaseous phase in a predetermined temperature range.

4. Process according to any one of the previous claims,
**characterized in that** said liquid phase and said gaseous phase are flowed in countercurrent through said at least one basket.

5. Process according to any one of the previous claims,
**characterized in that** said liquid phase is flowed through said at least one basket with substantially axial motion.

6. Process according to claim 5, **characterized in that** said gaseous phase is flowed through said at least one basket with substantially axial motion.

7. Process according to claim 5, **characterized in that** said gaseous phase is flowed through said at least one basket with radial motion.

8. Process according to claim 5, **characterized in that** said liquid phase and said gaseous phase are flowed with axial and radial motion, respectively, through a plurality of baskets for containing the filling superimposed one above the other and they are subjected in each of said baskets to indirect heat exchange through at least one heat exchanger embedded in the filling of each of said baskets.

9. Filled-type column (1) for carrying out mass transfer between a liquid phase and a gaseous phase of the type comprising:
- an outer shell (2);
- at least one basket (3a, 3b) for containing the filling extending in said shell (2), said at least one basket (3a, 3b) being crossed by said phases;
- means (5, 6) for feeding to said column (1) said liquid phase and said gaseous phase, respectively, in fluid communication with said at least one basket (3a, 3b);
- means (7, 8) for extracting from said column (1) said liquid phase and said gaseous phase, respectively, in fluid communication with said at least one basket (3a, 3b);
**characterized in that** it comprises at least one heat exchange unit (20) inside said at least one basket (3a, 3b) to carry out an indirect heat exchange with said liquid phase and said gaseous phase.

10. Filled-type column (1) according to claim 9,
**characterized in that** it comprises:
- a substantially cylindrical outer shell (2),
- at least one basket (3a-3b) for containing the filling extending coaxially in said shell (2) and equipped with opposite gas-permeable cylindrical walls (9, 10), inner and outer respectively, said at least one basket (3a, 3b) being crossed with substantially axial motion by said liquid phase,
- a space (11) defined between an inner wall (2a) of said shell (2) and said outer wall (10) of said at least one basket (3a, 3b),
- a cylindrical space (12) defined inside said inner wall (9) of said at least one basket (3a, 3b),
- respective means (5, 6) for feeding said liquid phase and said gaseous phase to said column (1);
- respective means (7, 8) for extracting said liquid phase and said gaseous phase from said column (1),
- means (14, 15) for flowing said gaseous phase through said at least one basket (3a, 3b) from said space (11) to said cylindrical space (12), or vice-versa.

11. Filled-type column (1) according to claim 10,
**characterized in that** it comprises a plurality of annular baskets (3a, 3b) for containing the filling superimposed one above the other and extending coaxially in said shell (2), inside each basket (3a, 3b) a respective heat exchange unit (20) being arranged to carry out an indirect heat exchange with said liquid phase and said gaseous phase.

12. Filled-type column (1) according to any one of the previous claims from 9 to 11, **characterized in that** said at least one heat exchange unit (20) comprises a plurality of heat exchangers (21).

13. Filled-type column (1) according to claim 12,
**characterized in that** said heat exchangers (21) have a substantially box-shaped structure with rectangular plates having long sides (21a) parallel to the longitudinal axis of the shell (2) of the column (1) and short sides (21b) that extend radially.

14. Filled-type column (1) according to claim 12,
**characterized in that** said heat exchangers (21) are arranged substantially radially in said at least one basket (3a, 3b).
